# DEMANDE DE BREVET EUROPEEN

(11) **EP 2 177 840 A1**
(43) Date de publication de la demande: **21.04.2010**
(21) Numéro de dépôt: 09305969.9
(22) Date de dépôt: 12.10.2009
(51) Int. Cl.: F24D 19/06, F24D 13/02, F24H 7/00, F24C 7/04, F24D 19/02

(54) **Radiateur et équipement de chauffage de bâtiment**

(30) Priorité: 13.10.2008 FR 0856912
(71) Demandeur: Perrier, Jean-Michel, 01800 Villieu (FR)
(72) Inventeur: Perrier, Jean-Michel, 01800 Villieu (FR)
(74) Mandataire: Denjean, Eric

(57) **Abrégé**

Un radiateur de chauffage de bâtiment comprend un corps chauffant (10) et un masque décoratif au moins en partie amovible (14), qui définit une face avant (2) d'échange thermique avec l'air d'une pièce en étant monté devant le corps chauffant (10).

## Description

### DOMAINE TECHNIQUE

La présente invention se rapporte au domaine du chauffage des bâtiments, tels que ceux abritant des sociétés ou des bureaux, ou tels que les maisons individuelles et les immeubles collectifs. Plus précisément, elle concerne un radiateur et un équipement de chauffage de bâtiment.

### TECHNIQUES ANTERIEURES

Le chauffage d'un bâtiment peut s'effectuer par soufflage d'air chaud dans une ou plusieurs pièces de ce bâtiment, l'air entraîné vers ces pièces provenant d'un seul et même écoulement qui est divisé après avoir été chauffé dans une chaudière ou une pompe à chaleur.

Le chauffage d'un bâtiment peut également se faire au moyen de plusieurs radiateurs qui sont répartis dans le bâtiment et dont chacun est prévu pour chauffer une partie seulement de ce bâtiment, par exemple l'une de ses pièces. Chaque radiateur comporte un corps chauffant libérant une chaleur qui peut lui avoir été apportée par un liquide caloporteur, dans le cas d'un chauffage central, ou qui peut avoir été produite par effet Joule. Cette chaleur est transmise par convection et rayonnement à l'air ambiant se trouvant dans le bâtiment.

Le ou les radiateurs équipant une pièce y sont visibles. Lorsque l'échange de chaleur entre le radiateur et l'air ambiant s'effectue sans convection forcée, le radiateur doit être aussi dégagé que possible, tandis que ses dimensions doivent être conséquentes afin que sa surface d'échange de chaleur avec l'air ambiant soit suffisamment importante. Dans ce cas, le radiateur est encore plus visible.

Etant apparents, le ou les radiateurs équipant une pièce peuvent participer à l'agrément visuel dans cette pièce. Des créateurs ont donc imaginé des radiateurs ayant une esthétique propre. Chacun de ces radiateurs peut se marier harmonieusement avec certaines décorations de pièce, mais pas avec d'autres. Or, la décoration d'une pièce, en particulier les revêtements, les peintures ou autres parements couvrant ses différentes parois, est amenée à être modifiée, par exemple lors de réfections, tout comme l'ameublement de la pièce. Un radiateur ayant une esthétique particulière peut donc embellir une pièce, puis y jurer après un changement de décoration. Or, le remplacement d'un radiateur raccordé à une chaudière de chauffage central est une opération lourde, outre qu'un radiateur ayant une esthétique propre imaginée par un créateur est souvent très coûteux.

Les documents WO97/403 et DE 2240988 décrivent des radiateurs sur la face avant desquels est apposée une plaque de pierre ou de céramique. La plaque a pour effet de cacher le radiateur et de diffuser la chaleur.

Les documents FR-A-2880412 et DE 2221971 décrivent des radiateurs pourvus sur leur face avant d'une plaque interchangeable, avantageusement en verre, munie de motifs décoratifs. Un vide existant entre la plaque et le corps chauffant, il n'y a pas une diffusion homogène de la chaleur. En outre, le décor en étant agencé sur la face avant du radiateur est exposé au risque de dégradation telle que rayures, chocs etc....

### RESUME DE L'INVENTION

Le problème que se propose donc de résoudre l'invention est de mettre au point un radiateur muni d'un décor interchangeable, et qui diffuse correctement la chaleur.

Pour ce faire, le demandeur a eu l'idée de combiner plaque en pierre ou équivalent et plaque en verre et d'agencer le décor non plus forcément sur la plaque en verre mais au moins sur la plaque en pierre. De la sorte, le décor se trouve protégé de la circulation. Toutefois, en raison de la forte diffusion de chaleur au niveau de la pierre qui joue le rôle d'accumulateur de calories, la problématique était concomitamment de mettre au point un décor qui ne soit pas sensible à la chaleur.

Pour résoudre ce problème, le Demandeur a ajouré la plaque de pierre à la forme souhaitée et rempli la partie laissée vide par un matériau de forme complémentaire thermoconducteur susceptible d'être distingué du matériau constitutif de la plaque.

L'avantage de cette solution est qu'elle ne requiert pas la mise en oeuvre de produits sensibles à la chaleur tels que par exemple des adhésifs, les formes complémentaires étant simplement retenues par la face avant du radiateur. En outre, l'utilisation d'un matériau thermoconducteur évite toute déperdition de chaleur.

En d'autres termes, l'invention a pour objet un radiateur de chauffage de bâtiment, comprenant un corps chauffant et une face avant non opaque, avantageusement en verre, qui se caractérise en ce qu'il comprend, en contact avec le corps chauffant et la face avant, un support décoratif conducteur de chaleur présentant sur toute ou partie de son épaisseur des formes ajourées destinées à recevoir des motifs ou formes complémentaires thermoconductrices retenues perpendiculairement par la face avant, le support décoratif et la face avant étant amovibles.

Autrement dit, le masque décoratif comporte un écran non opaque et un décor comprenant une combinaison remplaçable de plusieurs pièces visibles à travers l'écran non opaque qui définit ladite face avant, les pièces de la combinaison remplaçable étant retenues perpendiculairement à ladite face avant par emprisonnement vers l'avant par ledit écran et vers l'arrière par le corps chauffant.

Les découpes effectuées dans le support décoratif peuvent donc être traversantes ou simplement usinées. L'essentiel est de laisser un espace suffisant pour venir loger une forme complémentaire.

Le support décoratif peut être fabriqué en tout type de matériau conducteur et accumulateur de chaleur. Il peut s'agir de marbre, de pierre etc... Dans un mode de réalisation avantageux, les formes complémentaires sont fabriquées en métal.

Dans la suite de la description, on désigne la combinaison support conducteur de chaleur - face avant par l'expression « masque décoratif ».

Une immobilisation par coopération de formes complémentaires permet de ne pas fixer rigidement les pièces du décor les unes par rapport aux autres et de laisser un jeu de dilation entre elles, de manière que ces pièces puissent se dilater différemment sans que cela conduise à l'apparition de contraintes importantes, susceptibles de mener à des fissurations ou d'autres dégradations.

Le masque décoratif peut ainsi participer à la définition d'une esthétique particulière du radiateur. Cette esthétique n'est toutefois pas figée, en pouvant être modifiée par remplacement d'une partie au moins du masque décoratif, ce que permet son caractère amovible. En particulier, lors d'un changement de la décoration de la pièce pourvue du radiateur selon l'invention, celui-ci peut être équipé d'un nouveau masque décoratif dont l'esthétique se marie harmonieusement avec la dernière décoration. Le remplacement du masque décoratif par un autre peut également répondre à d'autres préoccupations, par exemple à une simple envie de changement.

Par ailleurs, le radiateur selon l'invention est aisément personnalisable par son acheteur. Cela peut constituer son principal intérêt aux yeux de certains acquéreurs. Par exemple, un radiateur selon l'invention peut être installé dans une zone de réception de visiteurs ou dans lieu d'accueil du public, tel qu'un hall d'entrée ou une salle de réunion d'une société ou d'une organisation. Dans ce cas, son masque décoratif et dans la pratique, le support conducteur de chaleur agencé avec les formes complémentaires peut avantageusement représenter l'emblème, le nom et/ou un slogan de l'entité installée dans le bâtiment où se trouve le radiateur.

Dans un mode de réalisation avantageux, le radiateur est muni, au moins en regard de l'épaisseur de la face avant en verre, avantageusement au niveau de la partie inférieure du radiateur, d'une source lumineuse, en particulier de LED. Dans un mode de réalisation perfectionné, la face arrière de la paroi en verre est gravée. Lorsque la source lumineuse fonctionne, la forme de la gravure vient se refléter sur le support conducteur permettant ainsi d'obtenir un effet particulièrement esthétique.

En pratique, le support conducteur, par exemple en marbre ou équivalent, peut présenter des découpes en forme de lettre, les découpes étant comblées par des lettres métalliques de différentes couleurs. Dans ce cas, la face arrière de la plaque en verre peut être gravée de manière à définir le contour des lettres agencées sur le support conducteur, la gravure venant ainsi se superposer au moment de l'éclairage avec la périphérie des lettres du support. On obtient ainsi un double effet, à savoir l'éclairage en couleur des lettres et la mise en valeur de leur périphérie par un rayon lumineux continu provenant de la partie vitrée, par retroéclairage.

Avantageusement, le masque décoratif est rapporté sur l'avant du radiateur, c'est-à-dire sur le corps chauffant, au moyen d'un dispositif de montage, de préférence répartis dans les 4 angles. En pratique, le dispositif de montage se présente sous la forme de tige présentant une première extrémité ancrée dans le corps chauffant, qui reçoit au moins une partie du poids du masque décoratif, et une deuxième extrémité à l'opposé de la première extrémité, pourvue d'une tête.

Le masque décoratif en appui simple sur la face avant du corps chauffant peut à la fois recevoir efficacement de la chaleur de ce corps chauffant avant de la transférer à l'air ambiant, c'est-à-dire remplir parfaitement une fonction de conduction de chaleur depuis le corps chauffant jusqu'à la face avant du radiateur, et ne pas se dilater comme le corps chauffant sans qu'il s'ensuive des fissurations, voire des fractures ou d'autres dégradations au sein du radiateur.

Avantageusement, le dispositif de montage comporte au moins un organe élastique de rappel du masque décoratif contre la face avant du corps chauffant.

Avantageusement, ledit organe élastique de rappel est comprimé entre le rebord de retenue et le masque décoratif.

Avantageusement, au moins un jeu de dilatation est prévu entre une partie dudit dispositif de montage et le masque décoratif, de manière à avoir une épaisseur selon une direction globalement parallèle au masque décoratif.

Avantageusement, le dispositif de montage comporte un organe résilient de calage élastique du masque décoratif, cet organe de calage élastique se trouvant dans ledit jeu de dilatation.

Avantageusement, ladite tige du support passe dans un trou du masque décoratif, ledit jeu de dilatation se trouvant entre le bord de ce trou et la tige du support.

Dans un mode de réalisation perfectionné, le radiateur présente sur toute sa périphérie, un cadre décoratif, tel que par exemple un cadre en tubes.

### DESCRIPTION SOMMAIRE DES FIGURES

L'invention sera bien comprise à la lecture de la description qui va suivre, donnée à titre d'exemple non limitatif et faite en se référant aux dessins annexés, parmi lesquels :
- la figure 1 est une vue en perspective d'un radiateur de chauffage conforme à l'invention et d'une portion d'un plancher et d'une paroi verticale portant ce radiateur ;
- la figure 2 est une vue partiellement éclatée, en coupe selon le plan II de la figure 1, et représente le radiateur de cette figure 1 ; et
- la figure 3 est une vue en coupe selon le plan III de la figure 1 et représente une portion latérale du radiateur de cette figure 1.

### MANIERE POSSIBLE DE REALISER L'INVENTION

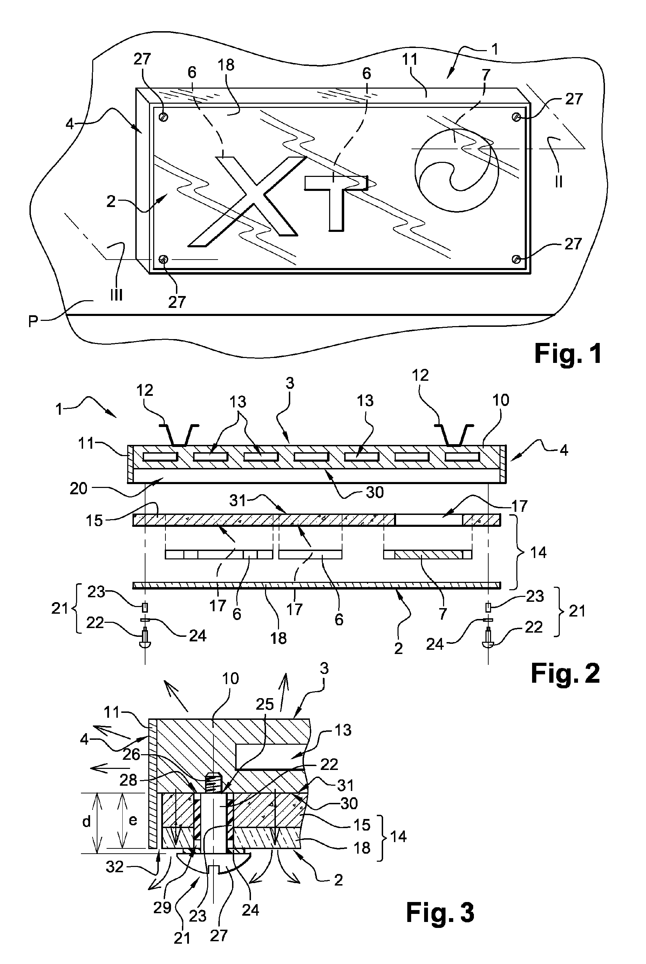

Sur la figure 1, un radiateur d'intérieur aplati 1, conforme à l'invention et prévu pour le chauffage d'une pièce de bâtiment, est représenté en position d'utilisation. Fixé à une paroi verticale **P** de la pièce à chauffer de manière à être parallèle à cette paroi, le radiateur **1** est lui-même sensiblement vertical.

Dans ce qui suit et dans les revendications annexées, les termes « arrière », « avant », ainsi que les termes analogues, se réfèrent à la perception du radiateur 1 par une personne se trouvant devant ce radiateur **1,** dans la pièce délimitée par la paroi **P.**

Le radiateur **1** possède deux faces principales opposées, à savoir une face avant **2** sensiblement verticale et une face arrière référencée **3** à la figure 2 et tournée vers la paroi **P.** Un bord périphérique **4,** de forme rectangulaire dans l'exemple représenté, recouvre la périphérie du radiateur.

Le radiateur **1** comporte un décor, qui est visible du côté de sa face principale apparente, c'est-à-dire de sa face avant **2,** et qui comporte des lettres **6** et un emblème ou logo 7 dans l'exemple représenté, tout en pouvant également présenter toute autre forme imaginable.

Ainsi qu'on peut le voir à la figure **2****,** le radiateur **1** comporte un corps chauffant **10,** ainsi qu'un cadre périphérique **11** dans lequel est monté ce corps chauffant **10** et qui définit le bord **4.** Des ferrures arrière **12** de fixation du radiateur **1** à la paroi **P** équipent le corps chauffant **10.**

Dans l'exemple représenté, le radiateur **1** est destiné à faire partie d'un chauffage central et son corps **10** est conçu pour être chauffé par un liquide caloporteur et parcouru à cet effet par ce liquide, pour lequel il définit un chemin de circulation ayant une configuration connue en soi et comprenant des conduits **13.** Le chauffage du corps **10** peut se faire également de toute autre manière appropriée, par exemple par effet Joule au moyen d'une ou plusieurs résistances électriques.

Le décor visible sur l'avant du radiateur **1** est défini par une combinaison de plusieurs pièces remplaçables, qui font partie d'un masque décoratif **14** et qui sont une plaque d'assemblage **15** et des inserts. Ces inserts forment les éléments individuels du décor, c'est-à-dire les lettres **6** et l'emblème **7.** Ils sont emboités à jeu réduit dans des logements complémentaires, qui sont ménagés dans la plaque d'assemblage **15** et qui présentent avantageusement la forme de fenêtres traversantes **17.** Chaque fenêtre 17 comporte un bord ou contour sensiblement complémentaire de celui de l'insert **6** ou **7** qu'elle reçoit.

Le décor défini par la combinaison des pièces **6, 7** et **15** est visible à travers un écran non opaque **18** se trouvant devant ces pièces.

La plaque d'assemblage **15** et l'écran **18** du masque décoratif **14** sont faits de matériaux thermiquement conducteurs. De préférence, ces matériaux comportent en outre une capacité calorifique suffisamment élevée pour que le masque **14** puisse se comporter comme un accumulateur de chaleur à même d'amortir les variations de température entre le corps chauffant **10** et la face avant **2.** L'écran **18** est avantageusement fait de verre et peut porter des motifs gravés sur sa face arrière. La plaque d'assemblage **15** peut, par exemple, être faite de marbre. De préférence, les inserts **6** et **7** possèdent des propriétés thermiques analogues à celles du reste du masque **14.**

Dans un mode de réalisation non représenté, le radiateur présente, au niveau de son extrémité inférieure, et sur toute sa largeur, une source lumineuse, en pratique une rampe de LED monochrome, agencée en regard de l'épaisseur de la plaque de verre. Combiné à la présence de motifs gravés sur la face arrière du panneau de verre, l'éclairage dans l'épaisseur, entraine un rétroéclairage des motifs gravés sur la plaque de marbre.

Un dispositif de montage de l'ensemble plaque d'assemblage / face avant devant le corps chauffant **10** comporte quatre supports **21** disposés à distance les uns des autres, au niveau des quatre coins de la face avant **2.** Le cadre **11** délimite latéralement un logement **20,** dont le corps **10** forme le fond. Le masque 14 (plaque d'assemblage / face avant ) est reçu dans ce logement **20,** où il repose sur les supports **21.**

Ainsi qu'on peut bien le voir à la figure 3, chaque support **21** comporte une vis **22** qui est pourvue d'un organe résiliant en forme de manchon **23** et d'un organe élastique de rappel en forme d'anneau **24.** Chaque vis **22** comporte un épaulement **25** et une portion d'extrémité filetée **26,** qui est vissé dans le corps chauffant **10** jusqu'au serrage de l'épaulement **25** contre la face avant de ce corps chauffant **10.** A l'opposé de sa portion filetée **26,** chaque vis **22** comporte une tête **27** qui forme un rebord de retenue du masque **14** vers l'avant.

La tige de chaque vis **22** passe dans un trou **28** ménagé à la fois dans la plaque d'assemblage **15** et dans l'écran **18.** Un jeu annulaire de dilatation **29** est prévu entre le bord du trou **28** et la tige de la vis **22** passant par ce trou. La distance d entre l'épaulement **25** et la tête **27** d'une vis **22** quelconque est supérieure à l'épaisseur *e* du masque **14,** de manière que la force de serrage empêchant le dévissage de cette vis **22** s'exerce essentiellement au niveau de l'épaulement **25.** Grâce à cela, les axes des trous **28** peuvent se déplacer par rapport aux axes des vis **22,** de manière à faciliter des différences de dilatation entre le corps chauffant **10,** la plaque d'assemblage **15** et l'écran **18.**

Chaque manchon **23** est enfilé sur la tige d'une vis **22** et se trouve entre cette tige et le bord d'un trou **28,** dans un jeu annulaire **29,** de manière à s'étendre sur toute l'épaisseur de ce jeu **29.** Les manchons **23** réalisent ainsi un calage élastique du masque **14** par rapport aux supports **21,** sans empêcher les différences de dilatation mentionnées précédemment d'avoir lieu.

Un jeu de dilatation **32** est également prévu entre le bord périphérique du masque **14** et la face interne du cadre **11.** Des jeux de dilatation autres que les jeux **29** et **32** peuvent également être prévus, notamment entre les bords des fenêtres **17** et les inserts **6** et **7.**

La plaque d'assemblage **15** et l'écran **18** du masque **14** sont bloqués vers l'arrière par le corps chauffant **10** et vers l'avant par les anneaux **24** et les têtes **27** des vis **22.** Dans la direction horizontale qui leur est perpendiculaire, ils sont donc retenus en étant simplement emprisonnés entre les têtes **27** des vis **22** et le corps chauffant **10.** La face arrière **31** du masque **14** est en appui simple sur la face avant **30** du corps chauffant **10.** N'étant pas rigidement associés l'un à l'autre, le corps chauffant **10** et l'écran **14** peuvent se dilater différemment sans que cela fasse naître des contraintes élevées dont l'intensité et/ou la récurrence pourraient conduire à des fissurations, voire à des ruptures. Dans le même but, l'écran **18** et la plaque d'assemblage **15** sont également en appui simple l'un contre l'autre.

Les anneaux élastiques **24** sont comprimés entre les têtes **27** et le masque **14,** de manière à exercer un rappel de ce masque **14** vers l'arrière, contre la face avant **30** du corps chauffant **10.**

Les inserts **6** et **7** sont emprisonnés vers l'avant et vers l'arrière dans les fenêtres **17,** entre le corps chauffant **10** et l'écran **18.** Dans le plan vertical de la plaque d'assemblage **15,** chacun d'eux est immobilisé, notamment angulairement, par coopération de son bord périphérique avec le bord complémentaire de la fenêtre **17** où il se trouve. Les inserts **6** et **7** sont emprisonnés sans être rigidement fixés, ce qui contribue à laisser s'effectuer librement des dilatations d'amplitudes différentes.

Le radiateur **1** ne comporte pas de ventilateur, ni aucun autre moyen d'entraînement de l'air ambiant. Ses échanges de chaleur avec cet air ambiant s'effectuent donc autrement que par convection forcée. Plus précisément, ils se réalisent par rayonnement et par convection naturelle, notamment au niveau de ses faces principales, en particulier au niveau de sa face avant **2** qui est tournée vers le volume de la pièce à chauffer et que définit l'écran **18** du masque **14.**

Sur la figure 3, des flèches non référencées symbolisent les transferts de chaleur dans et depuis le radiateur **1.** La chaleur échangée entre la face avant **2** et l'air ambiant vient du corps chauffant **10.** Elle traverse le masque **14** par conduction, après que le corps chauffant **10** l'a transférée à ce masque **14** au niveau de la zone étendue de connexion thermique que forme le contact entre sensiblement toute la face arrière **31** de la plaque d'assemblage **15** et la face avant **30** du corps chauffant **10.** Une connexion thermique semblable se trouve au niveau de la zone étendue de contact entre la plaque d'assemblage **15** et l'écran **18** du masque **14.**

Du fait de sa capacité calorifique conséquente, le masque décoratif **14** remplit également une fonction d'accumulateur de chaleur, de manière à amortir les variations de température au sein du radiateur 1 et à ainsi céder une quantité de chaleur plus constante dans le temps, à l'air ambiant, ce qui se traduit par un plus grand confort thermique.

Le décor est personnalisable, puisqu'il dépend des formes, des emplacements et des aspects respectifs des inserts **6** et **7,** comme de l'aspect de la plaque d'assemblage **15,** c'est-à-dire d'éléments rapportés.

Un dévissage des vis **22** permet de démonter le masque **14** qui est donc amovible. Il s'ensuit que sont remplaçables les pièces rapportées **6, 7** et **15** dont la combinaison définit le décor avant. Ce décor et l'esthétique d'ensemble du radiateur **1** peuvent donc être modifiés pour une raison quelconque, par exemple suite à une évolution de la décoration de la pièce où se trouve le radiateur **1.**

L'invention ne se limite pas au mode de réalisation décrit précédemment. En particulier, les pièces rapportées **6, 7** et **15** définissant le décor peuvent être amovibles sans que le soit également l'écran **18.** De plus, le décor peut être constitué autrement que proposé précédemment. Par exemple, il peut comprendre une combinaison d'inserts se bloquant mutuellement par coopération de leurs bords de formes complémentaires, dans une fenêtre telle que celle au centre d'un cadre pouvant remplacer la plaque **15.**

## Revendications

1. Radiateur (1) de chauffage de bâtiment, comprenant un corps chauffant (10) et une face avant (2) non opaque, **caractérisé en ce en ce qu'**il comprend, en contact avec le corps chauffant (10) et la face avant (2), un support décoratif conducteur de chaleur (15) présentant sur toute ou partie de son épaisseur des formes ajourées (17) destinées à recevoir des formes complémentaires (6, 7) thermoconductrices retenues perpendiculairement par la face avant (2), le support décoratif (15) et la face avant (2) étant amovibles.

2. Radiateur (1) selon la revendication 1, **caractérisé en ce que** la face avant (2) est en verre ou en matériaux plastiques.

3. Radiateur (1) selon la revendication 1, **caractérisé en ce que** le support décoratif (15) est fabriqué en marbre ou en pierre tandis que les formes complémentaires (6, 7) sont fabriquées en métal.

4. Radiateur (1) selon la revendication 1, **caractérisé en ce qu'**il est muni, au niveau de sa partie inférieure, d'une source lumineuse, agencée en regard de l'épaisseur de la face avant non opaque.

5. Radiateur (1) selon la revendication 1, **caractérisé en ce que** l'arrière de la face avant (2) est gravée.

6. Radiateur (1) selon la revendication 1, **caractérisé en ce que** le support décoratif (15) et la face avant (2) sont rapportés sur l'avant du radiateur au moyen d'un dispositif de montage se présentant sous la forme de tige (22) présentant une première extrémité ancrée dans le corps chauffant et une deuxième extrémité à l'opposé de la première extrémité, pourvue d'une tête (27).

7. Radiateur (1) selon la revendication 1, **caractérisé en ce que** le dispositif de montage comporte au moins un organe élastique (24) de rappel du support décoratif et de la face avant contre la face avant (30) du corps chauffant (10).

8. Radiateur selon la revendications 6, **caractérisé en ce qu'**au moins un jeu de dilatation (29) est prévu entre une partie (22) dudit dispositif de montage et l'ensemble support décoratif / face avant.

9. Radiateur selon la revendication 8 **caractérisé en ce que** le dispositif de montage comporte un organe résilient (23) de calage élastique de l'ensemble support décoratif / face avant (14), cet organe de calage élastique (23) se trouvant dans ledit jeu de dilatation (29).
